# EUROPÄISCHE PATENTSCHRIFT

(11) **EP 3 849 694 B1**
(45) Veröffentlichungstag und Bekanntmachung des Hinweises auf die Patenterteilung: **13.07.2022**
(21) Anmeldenummer: 19813479.3
(22) Anmeldetag: 29.11.2019
(51) Int. Cl.: B01F 23/233, B01F 27/117, B01F 27/172, B01F 27/80, B01F 27/94, B01F 33/503, C02F 7/00, B01F 101/00

(54) **HYPERBOLOID-RÜHRKÖRPER ZUM UMWÄLZEN VON FLÜSSIGKEITEN SOWIE RÜHR- UND BEGASUNGSEINRICHTUNG**
HYPERBOLOID AGITATOR FOR CIRCULATING LIQUIDS, AND AGITATING AND GASSING DEVICE
CORPS D'AGITATION HYPERBOLOÏDE POUR FAIRE CIRCULER DES LIQUIDES ET DISPOSITIF D'AGITATION ET D'APPORT DE GAZ

(30) Priorität: 03.12.2018 DE 202018106871 U; 21.01.2019 DE 102019101416
(43) Veröffentlichungstag der Anmeldung: 21.07.2021
(73) Patentinhaber: INVENT Umwelt- und Verfahrenstechnik AG, 91058 Erlangen (DE)
(72) Erfinder: HÖFKEN, Marcus, 91054 Erlangen (DE); HAGSPIEL, Thomas, 92353 Postbauer-Heng (DE); FREY, Torsten, 90461 Nürnberg (DE); STEIDL, Walter, 90559 Burgthann (DE)
(74) Vertreter: Dr. Gassner & Partner mbB
(86) Internationale Anmeldenummer: PCT/EP2019/083096
(87) Internationale Veröffentlichungsnummer: WO 2020/114907

(56) Entgegenhaltungen:
- EP-A2- 0 365 013
- KR-Y1- 200 447 286

## Beschreibung

Die Erfindung betrifft einen Hyperboloid-Rührkörper zum Umwälzen von Flüssigkeiten, insbesondere Wasser, Abwasser oder dgl. Sie betrifft ferner eine Rühr- und Begasungseinrichtung.

Ein Hyperboloid-Rührkörper sowie eine Rühr- und Begasungseinrichtung sind beispielsweise aus der DE 202 07 376 U1 bekannt.

Bei der bekannten Rühr- und Begasungseinrichtung ist an der Spitze eines turmartigen Gestells ein Motor mit einem Getriebe vorgesehen. Eine Getriebewelle ist mit einer hohlen Rührwelle verbunden, an deren Ende ein einschalig ausgebildeter Hyperboloid-Rührkörper angebracht ist. Der Hyperboloid-Rührkörper weist an seiner Oberseite abschnittsweise radial verlaufende Transportrippen auf, welche zum Umfangsrand des Rührkörpers hin in eine tangentiale Richtung umbiegen. An einer Unterseite des Rührkörpers sind am Umfangsrand Scherrippen vorgesehen. Unterhalb des Rührkörpers befindet sich eine Ringleitung, durch welche Luft zugeführt wird. Die Luft gelangt durch ein Stützelement des Turms zur Ringleitung.

Die bekannte Rühr- und Begasungseinrichtung erfordert die Bereitstellung eines turmartigen Gestells, und zur Belüftung ferner das Vorsehen einer Ringleitung. Zwar eignet sich die bekannte Rühr- und Begasungseinrichtung zum Umwälzen und Begasen von in einem Behälter aufgenommenen Wasser, Abwasser oder dgl. Dagegen ist die bekannte Rühr- und Begasungseinrichtung insbesondere zum Umwälzen und Begasen von natürlichen Gewässern, wie Teichen, Seen und dgl. ungeeignet, da es hier an einem festen Untergrund zum Abstützen des turmartigen Gestells fehlt. Abgesehen davon ist die bekannte Rühr- und Begasungseinrichtung relativ aufwändig in der Herstellung. KR 200447286Y1 offenbart einen Hyperboloid-Rührkörper mit mehreren im Hohlkörper vorgesehenen Luftaustrittsöffnungen gemäß dem Oberbegriff des Anspruch 1.

Aufgabe der Erfindung ist es, die Nachteile nach dem Stand der Technik zu beseitigen. Es soll insbesondere ein Hyperboloid-Rührkörper sowie eine Rühr- und Begasungseinrichtung angegeben werden, welche sich universell zum Umwälzen und Begasen von Flüssigkeiten eignen. Nach einem weiteren Ziel der Erfindung soll die Herstellung insbesondere der Rühr- und Begasungseinrichtung vereinfacht werden.

Diese Aufgabe wird durch die Merkmale der Patentansprüche 1 und 15 gelöst.

Zweckmäßige Ausgestaltungen der Erfindung ergeben sich aus den Merkmalen der Patentansprüche 2 bis 14.

Nach Maßgabe der Erfindung ist der Hyperboloid-Rührkörper als Hohlkörper ausgebildet, wobei im Anschlussabschnitt ein zentraler Durchbruch zum Zuführen von Luft vorgesehen ist, und wobei stromabwärts des Durchbruchs eine Luftverteilungseinrichtung zum Verteilen von durch den Durchbruch zugeführter Luft hin zu mehreren im Hohlkörper vorgesehenen Luftaustrittsöffnungen vorgesehen ist. - Mit dem erfindungsgemäßen Hyperboloid-Rührkörper ist sowohl ein Umwälzen als auch ein Begasen von Flüssigkeiten möglich. Dabei kann in vorteilhafter Weise eine an sich bekannte hohle Rührwelle zum Zuführen von Luft verwendet werden. Bei einer unter Verwendung des vorgeschlagenen Hyperboloid-Rührkörpers hergestellten Rühr- und Begasungseinrichtung kann auf das Vorsehen eines turmartigen Gestells sowie einer separaten Ringleitung zur Belüftung verzichtet werden. Eine solche Rühr- und Begasungseinrichtung lässt sich mit vermindertem Aufwand herstellen. Sie lässt sich an Ort und Stelle schnell und einfach montieren. Es ist insbesondere nicht erforderlich, Belüftungsleitungen unter Wasser zu verlegen.

Die Luftverteilungseinrichtung weist stromabwärts des Durchbruchs einen Luftverteilungsraum mit mehreren Luftverteilungsdurchbrüchen auf. Jeder Luftverteilungsdurchbruch mündet vorteilhafterweise in einen Luftkanal, welcher durch abschnittsweise radial verlaufende Wände begrenzt ist. Die abschnittsweise radial verlaufenden Wände biegen zweckmäßigerweise zum Umfangsrand des Hyperboloid-Rührkörpers hin in eine tangentiale Richtung um. Die Luftaustrittsöffnungen sind zweckmäßigerweise jeweils an radial außen liegenden Endabschnitten der Luftkanäle vorgesehen. - Die vorgeschlagene Gestaltung des Hyperboloid-Rührkörpers, insbesondere die Luftverteilungseinrichtung nutzt soweit wie möglich die Geometrie des Hyperboloid-Rührkörpers. Es ergibt sich für die Gestaltung des Hohlkörpers eine kompakte Bauform. Das Vorsehen der Luftaustrittsöffnungen an den radial außen liegenden Endabschnitten der Luftkanäle trägt zu einer besonders effektiven Begasung der betreffenden Flüssigkeit bei.

Der Hyperboloid-Rührkörper ist aus einer den Anschlussabschnitt enthaltenden Oberschale und einer damit verbundenen Unterschale gebildet, wobei Luftkanäle durch die Ober- und die Unterschale begrenzt werden. Infolgedessen lassen sich die Luftkanäle durch einfaches Fügen der Oberschale und der Unterschale herstellen.

Zweckmäßigerweise erstrecken sich von der ersten Oberseite der Oberschale abschnittsweise radial verlaufende Transportrippen. Die Transportrippen können - ähnlich wie die Wände - zum Umfangsrand des Hyperboloid-Rührkörpers hin in eine tangentiale Richtung umbiegen. Zweckmäßigerweise erstrecken sich die Wände von einer zweiten Oberseite der Unterschale. Dabei entspricht nach einer besonders vorteilhaften Ausgestaltung der Verlauf der Wände dem Verlauf der Transportrippen, so dass beim Fügen der Ober- und der Unterschale sich jede Transportrippenunterseite jeweils auf eine Oberkante der Wände abstützt. Es ergibt sich damit eine besonders stabile und verwindungssteife Konstruktion. Ferner können so auf einfache Weise durch Fügen der Ober- mit der Unterschale die Luftkanäle hergestellt werden. - Die Wände können auch Öffnungen aufweisen oder aus mehreren Abschnitten gebildet sein, zwischen denen jeweils Lücken sich befinden.

Nach einer weiteren vorteilhaften Ausgestaltung ist die zweite Oberseite der Unterschale konkav, vorzugsweise hyperboloidartig geformt. D. h. sowohl die Oberals auch die Unterschale sind hyperboloidartig geformt. Es ergibt sich beim Fügen der Ober- mit der Unterschale ein besonders kompakter und stabiler Hohlkörper.

Zweckmäßigerweise sind die Luftaustrittsöffnungen in der Nähe eines Umfangsrands des Hohlkörpers vorgesehen. Insbesondere können die Luftaustrittsöffnungen in der Nähe eines Umfangsrands der Unterschale, insbesondere an einer der zweiten Oberseite gegenüberliegenden zweiten Unterseite der Unterschale vorgesehen sein. Zweckmäßigerweise sind an der zweiten Unterseite radial nach außen sich erstreckende Scherrippen angebracht.

Zweckmäßigerweise ist zwischen 2 Scherrippen zumindest eine der Luftaustrittsöffnungen vorgesehen. Wegen der vorgeschlagenen Anordnung werden durch die Luftaustrittsöffnungen austretende Luftblasen sofort durch die Wirkung der Scherrippen zerstört und/oder fein in der umgebenden Flüssigkeit verteilt. Es gelingt damit eine besonders effiziente Begasung der Flüssigkeit.

Die Ober- und die Unterschale können jeweils aus faserverstärktem Kunststoff hergestellt sein. Nach einer zweckmäßigen Ausgestaltung ist der Luftverteilungsraum aus einem rotationssymmetrischen, vorzugsweise konischen, Einsatz gebildet, in dessen Umfangswand die Luftverteilungsdurchbrüche vorgesehen sind. Auch der Einsatz kann aus faserverstärktem Kunststoff hergestellt sein. Infolgedessen lässt sich der Hohlkörper einfach aus wenigen Teilen, nämlich der Oberschale, der Unterschale und dem Einsatz, beispielsweise durch Verkleben, herstellen.

Nach weiterer Maßgabe der Erfindung wird eine Rühr- und Begasungseinrichtung vorgeschlagen, umfassend
einen Motor,
ein mit dem Motor antriebsmäßig verbundenes Getriebe mit einer Getriebehohlwelle,
ein mit einem ersten Ende der Getriebehohlwelle verbundenes Gebläse zum Zuführen von Luft,
eine mit einem zweiten Ende der Getriebehohlwelle verbundene Rührwelle, und
einem an einem dritten Ende der Rührwelle angebrachten erfindungsgemäßen Hyperboloid-Rührkörper.

Die vorgeschlagene Rühr- und Begasungseinrichtung ist einfach aufgebaut. Sie lässt sich schnell montieren. Sie kann beispielsweise zum Umwälzen und Begasen von Gewässern an einem Floß montiert werden.

Nachfolgend werden Ausführungsbeispiele der Erfindung anhand der Zeichnung näher erläutert. Es zeigen:
Fig. 1 eine teilweise aufgebrochene perspektivische Ansicht eines Hyperboloid-Rührkörpers,
Fig. 2 eine Draufsicht auf eine Oberschale,
Fig. 3 eine Unteransicht gemäß Fig. 2,
Fig. 4 eine Draufsicht auf eine Unterschale,
Fig. 5 eine Unteransicht gemäß Fig. 4 und
Fig. 6 eine schematische Schnittansicht durch ein Getriebe.

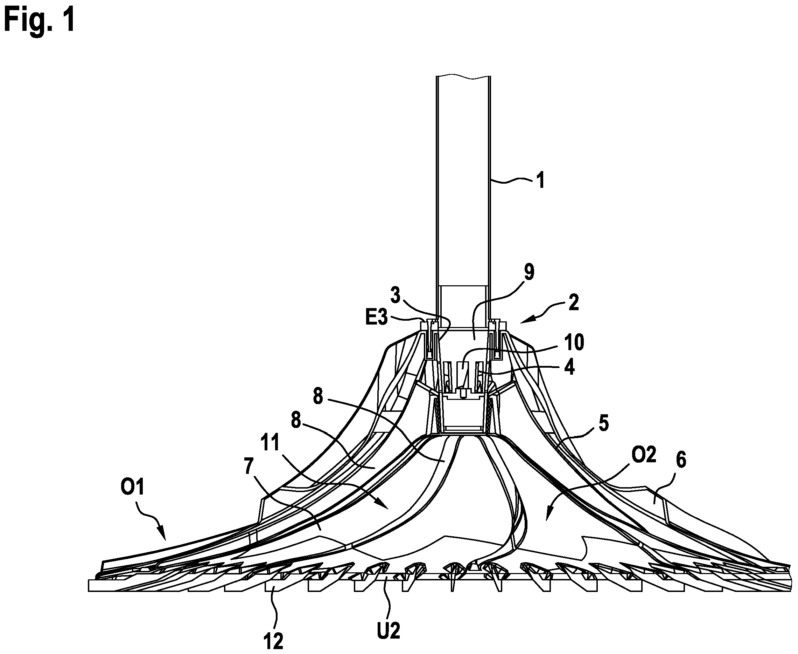

In Fig. 1 ist an einer hohlen Rührwelle 1 ein Hyperboloid-Rührkörper angebracht. Der Hyperboloid-Rührkörper weist einen mit dem Bezugszeichen 2 bezeichneten zentralen Anschlussabschnitt auf. Der Anschlussabschnitt 2 weist einen zentralen Durchbruch 3 zum Durchführen von Luft auf.

Mit dem Bezugszeichen 5 ist eine Oberschale bezeichnet, von deren erster Oberseite 01 sich Transportrippen 6 erstrecken. Mit dem Bezugszeichen 7 ist eine Unterschale bezeichnet, von deren zweiter Oberseite 02 sich Wände 8 erstrecken. Das Bezugszeichen 9 bezeichnet einen Einsatz, welcher stromabwärts des Durchbruchs 3 vorgesehen ist und einen Luftverteilungsraum 4 bildet. Der Einsatz 9 ist nach Art eines konischen Bechers ausgebildet und weist an seiner Umfangswand mehrere Luftverteilungsdurchbrüche 10 auf. Jeder der Luftverteilungsdurchbrüche 10 mündet in einen durch benachbarte Wände 8 sowie die Oberschale 5 und die Unterschale 7 gebildeten Luftkanal 11. An einer zweiten Unterseite U2 der Unterschale 7 sind an deren Umfangsrand Scherrippen 12 angebracht.

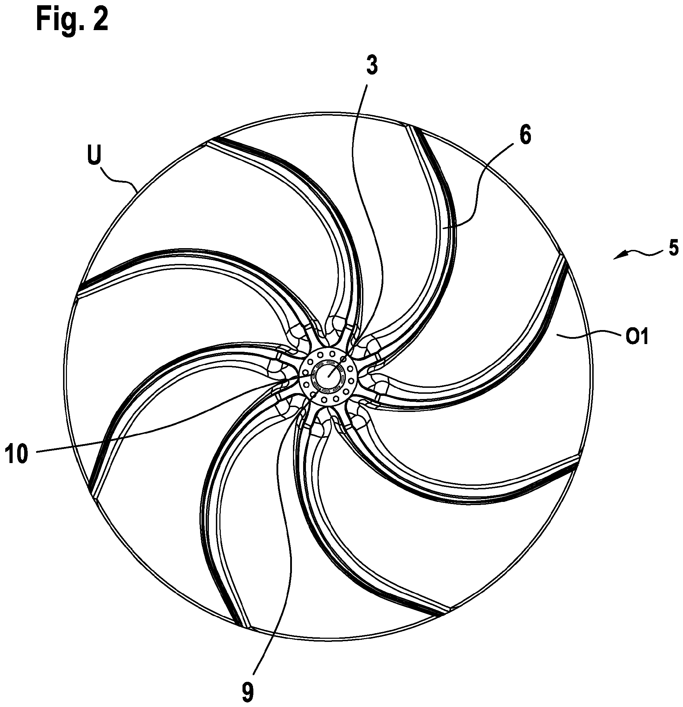

Fig. 2 zeigt eine Draufsicht auf die erste Oberseite 01 der Oberschale. Erkennbar sind die sich von der ersten Oberseite 01 erstreckenden Transportrippen, welche vom Durchbruch 3 her zunächst in eine radiale Richtung verlaufen und dann zum Umfangsrand U hin in eine tangentiale Richtung umbiegen. Ferner ist der dem Durchbruch 3 stromabwärts nachgeordnete Einsatz 9 mit den Luftverteilungsdurchbrüchen 10 erkennbar.

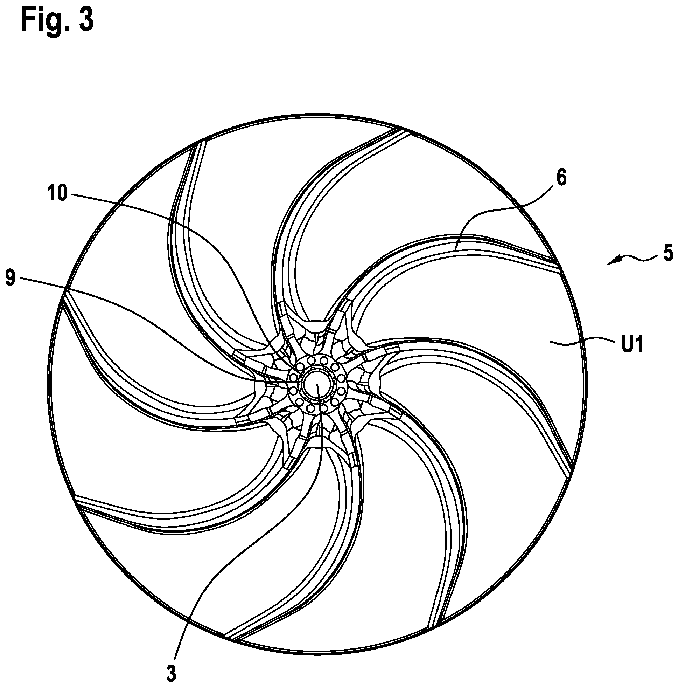

Fig. 3 zeigt eine Unteransicht gemäß Fig. 2. An einer ersten Unterseite U1 der Oberschale 5 sind die Transportrippen 6 in Form von Vertiefungen erkennbar.

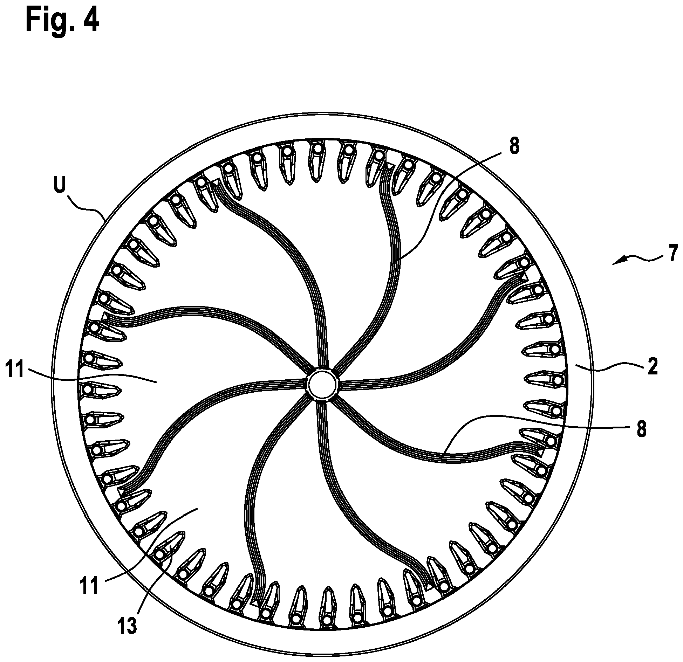

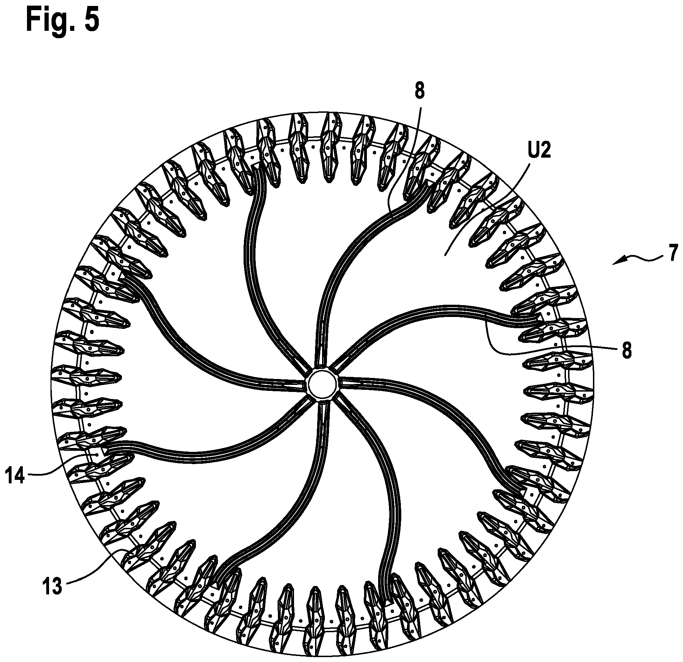

Fig. 4 zeigt eine Draufsicht auf die zweite Oberseite 02 der Unterschale 7. Die Unterschale 7 ist in ihrem Zentrum, d. h. gegenüberliegend dem in der Oberschale 5 vorgesehenen Durchbruch 3, geschlossen ausgebildet. Von der zweiten Oberseite 02 erstrecken sich die Wände 8. Die Wände 8 verlaufen - ähnlich wie die Transportrippen 6 - vom Zentrum her zunächst in einer radialen Richtung und biegen dann in eine im Wesentlichen tangentiale Richtung zum Umfangsrand U hin um. Am Umfangsrand U befinden sich eine Vielzahl von Halteeinrichtungen 13, welche Vertiefungen in der zweiten Oberseite 02 bilden. Die Halteeinrichtungen 13 dienen - wie insbesondere mit der nachfolgend erläuterten Fig. 5 ersichtlich ist - der Aufnahme und Befestigung der Scherrippen 12.

Fig. 5 zeigt eine Unteransicht gemäß Fig. 4. An einer zweiten Unterseite U2 der Unterschale sind die Wände 8 in Form von Vertiefungen erkennbar. Die Halteeinrichtungen 13 erstrecken sich dagegen von der zweiten Unterseite U2. Es wird insoweit auch auf die Fig. 1 verwiesen. Zwischen jeweils zwei benachbarten Halteeinrichtungen 13 bzw. zwei benachbarten Scherrippen 12 ist jeweils eine Luftaustrittsöffnung 14 vorgesehen.

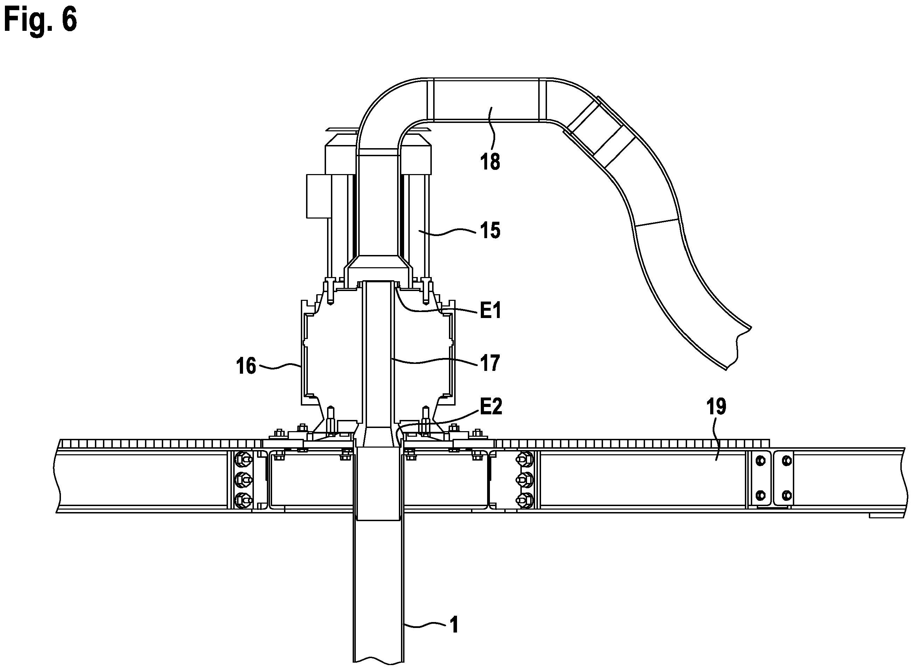

Fig. 6 zeigt eine schematische Schnittansicht durch ein Getriebe 16, welches antriebsmäßig mit einem Motor 15 verbunden ist. Das Getriebe 16 weist eine Getriebehohlwelle 17 auf, deren erstes Ende mit einer Luftzuführleitung 18 verbunden ist. Ein mit der Luftzuführleitung 18 verbundenes Gebläse ist hier nicht dargestellt. Ein zweites Ende E2 der Getriebehohlwelle 17 ist mit der hohlen Rührwelle 1 verbunden. Wie aus Fig. 1 ersichtlich ist, ist ein drittes Ende E3 der hohlen Rührwelle 1 mit dem in den Fig. 1 bis 5 gezeigten Hyperboloid-Rührkörper verbunden.

Die sich insbesondere aus den Fig. 1 und 6 ergebende Rühr- und Begasungseinrichtung kann beispielsweise an einem Floß 19 (siehe Fig. 6) angebracht sein. Damit lässt sich ein Gewässer, beispielsweise ein Teich, See oder dgl. effizient umwälzen und begasen.

### Bezugszeichenliste

- 1: Rührwelle
- 2: Anschlussabschnitt
- 3: Durchbruch
- 4: Luftverteilungsraum
- 5: Oberschale
- 6: Transportrippe
- 7: Unterschale
- 8: Wand
- 9: Einsatz
- 10: Luftverteilungsdurchbruch
- 11: Luftkanal
- 12: Scherrippe
- 13: Halteeinrichtung
- 14: Luftaustrittsöffnung
- 15: Motor
- 16: Getriebe
- 17: Getriebehohlwelle
- 18: Luftzuführleitung
- 19: Floß

- E1: Erstes Ende
- E2: Zweites Ende
- E3: Drittes Ende
- 01: Erste Oberseite
- 02: Zweite Oberseite
- U1: Erste Unterseite

## Patentansprüche

1. Hyperboloid-Rührkörper zum Umwälzen von Flüssigkeiten, insbesondere Wasser, Abwasser oder dgl., in dessen Zentrum ein Anschlussabschnitt (2) zum Anschluss an eine hohle Rührwelle (1) vorgesehen ist,
wobei der Hyperboloid-Rührkörper als Hohlkörper ausgebildet ist, wobei im Anschlussabschnitt (2) ein zentraler Durchbruch (3) zum Zuführen von Luft vorgesehen ist,
wobei stromabwärts des Durchbruchs (3) eine Luftverteilungseinrichtung (9, 10, 11) zum Verteilen von durch den Durchbruch (3) zugeführter Luft hin zu mehreren im Hohlkörper vorgesehenen Luftaustrittsöffnungen (14) vorgesehen ist,
**dadurch gekennzeichnet,**
**dass** der Hyperboloid-Rührkörper aus einer den Anschlussabschnitt (2) enthaltenden Oberschale (5) und einer damit verbundenen Unterschale (7) gebildet ist, wobei Luftkanäle (11) durch die Ober- (5) und die Unterschale (7) begrenzt werden.

2. Hyperboloid-Rührkörper nach Anspruch 1, wobei die Luftverteilungseinrichtung (9, 10, 11) stromabwärts des Durchbruchs (3) einen Luftverteilungsraum (4) mit mehreren Luftverteilungsdurchbrüchen (10) aufweist.

3. Hyperboloid-Rührkörper nach Anspruch 2, wobei jeder Luftverteilungsdurchbruch (10) in einen Luftkanal (11) mündet, welcher durch abschnittsweise radial verlaufende Wände (8) begrenzt ist.

4. Hyperboloid-Rührkörper nach Anspruch 3, wobei die Luftaustrittsöffnungen (14) jeweils an radial außenliegenden Endabschnitten der Luftkanäle (11) vorgesehen sind.

5. Hyperboloid-Rührkörper nach einem der vorhergehenden Ansprüche, wobei sich von der ersten Oberseite (O1) der Oberschale (5) abschnittsweise radial verlaufende Transportrippen (6) erstrecken.

6. Hyperboloid-Rührkörper nach einem der Ansprüche 3 bis 5, wobei sich die Wände (8) von einer zweiten Oberseite (O2) der Unterschale (7) erstrecken.

7. Hyperboloid-Rührkörper nach einem der Ansprüche 3 bis 6, wobei der Verlauf der Wände (8) dem Verlauf der Transportrippen (6) entspricht, so dass beim Fügen der Ober- (5) und der Unterschale (7) sich jede Transportrippenunterseite jeweils auf eine Oberkante der Wände (8) abstützt.

8. Hyperboloid-Rührkörper nach einem der vorhergehenden Ansprüche, wobei die zweite Oberseite (O2) der Unterschale (7) konkav, vorzugsweise hyperboloidartig, geformt ist.

9. Hyperboloid-Rührkörper nach einem der vorhergehenden Ansprüche, wobei an einer der zweiten Oberseite (O2) gegenüberliegenden zweiten Unterseite (U2) der Unterschale (7) radial nach außen sich erstreckende Scherrippen (12) angebracht sind.

10. Hyperboloid-Rührkörper nach einem der vorhergehenden Ansprüche, wobei die Luftaustrittsöffnungen (14) in der Nähe eines Umfangsrands (U) der Unterschale (7) vorgesehen sind.

11. Hyperboloid-Rührkörper nach einem der Ansprüche 9 oder 10, wobei jeweils zwischen zwei Scherrippen (12) eine der Luftaustrittsöffnungen (14) vorgesehen ist.

12. Hyperboloid-Rührkörper nach einem der vorhergehenden Ansprüche, wobei die Ober- (5) und die Unterschale (7) jeweils aus faserverstärktem Kunststoff hergestellt sind.

13. Hyperboloid-Rührkörper nach einem der Ansprüche 2 bis 12, wobei der Luftverteilungsraum (4) aus einem rotationssymmetrischen, vorzugsweise konischen, Einsatz (9) gebildet ist, in dessen Umfangswand die Luftverteilungsdurchbrüche (10) vorgesehen sind.

14. Hyperboloid-Rührkörper nach Anspruch 13, wobei der Einsatz (9) aus faserverstärktem Kunststoff hergestellt ist.

15. Rühr- und Begasungseinrichtung, umfassend
einen Motor (15),
ein mit dem Motor (15) antriebsmäßig verbundenes Getriebe (16) mit einer Getriebehohlwelle (17),
ein mit einem ersten Ende (E1) der Getriebehohlwelle (17) verbundenes Gebläse zum Zuführen von Luft,
eine mit einem zweiten Ende (E2) der Getriebehohlwelle (17) verbundene Rührwelle (1), und
einen an einem dritten Ende (E3) der Rührwelle (1) angebrachten Hyperboloid-Rührkörper nach einem der vorhergehenden Ansprüche.

## Claims

1. A hyperboloid agitator body for circulating liquids, in particular water, wastewater or the like, in the centre of which there is provided a connection portion (2) for connection to a hollow agitator shaft (1),
wherein the hyperboloid agitator body is formed as a hollow body, wherein a central aperture (3) for feeding air is provided in the connection portion (2),
wherein an air distribution device (9, 10, 11) for distributing air fed through the aperture (3) towards a plurality of air outlet openings (14) provided in the hollow body is provided downstream of the aperture (3),
**characterized in that**
the hyperboloid agitator body is formed from an upper shell (5) containing the connection portion (2) and a lower shell (7) connected to the upper shell (5), wherein air channels (11) are delimited by the upper shell (5) and the lower shell (7).

2. The hyperboloid agitator body according to claim 1, wherein the air distribution device (9, 10, 11) has an air distribution space (4) with a plurality of air distribution apertures (10) downstream of the aperture (3).

3. The hyperboloid agitator body according to claim 2, wherein each air distribution aperture (10) opens out into an air channel (11), which is delimited by walls (8) running radially in some sections.

4. The hyperboloid agitator body according to claim 3, wherein the air outlet openings (14) are each provided at radially outer end portions of the air channels (11).

5. The hyperboloid agitator body according to any one of the preceding claims, wherein transport ribs (6) running radially in some sections extend from the first upper side (O1) of the upper shell (5).

6. The hyperboloid agitator body according to any one of claims 3 to 5, wherein the walls (8) extend from a second upper side (O2) of the lower shell (7).

7. The hyperboloid agitator body according to any one of claims 3 to 6, wherein the course of the walls (8) corresponds to the course of the transport ribs (6), such that, when the upper and lower shells (5, 7) are joined, each transport rib underside is supported on an upper edge of one of the walls (8).

8. The hyperboloid agitator body according to any one of the preceding claims, wherein the second upper side (O2) of the lower shell (7) is formed in concave, preferably hyperboloid-like fashion.

9. The hyperboloid agitator body according to any one of the preceding claims, wherein radially outwardly extending shearing ribs (12) are attached to a second underside (U2) of the lower shell (7) opposite the second upper side (O2).

10. The hyperboloid agitator body according to any one of the preceding claims, wherein the air outlet openings (14) are provided in the vicinity of a peripheral edge (U) of the lower shell (7).

11. The hyperboloid agitator body according to claim 9 or 10, wherein one of the air outlet openings (14) is provided between each two shearing ribs (12).

12. The hyperboloid agitator body according to any one of the preceding claims, wherein the upper shell (5) and the lower shell (7) are each produced from fibre-reinforced plastic.

13. The hyperboloid agitator body according to any one of claims 2 to 12, wherein the air distribution space (4) is formed from a rotationally symmetrical, preferably conical insert (9), with the air distribution apertures (10) provided in the peripheral wall of said insert.

14. The hyperboloid agitator body according to claim 13, wherein the insert (9) is produced from fibre-reinforced plastic.

15. An agitator and gassing device, comprising
a motor (15),
a transmission (16) drivingly connected to the motor (15) and having a transmission hollow shaft (17),
a fan connected to a first end (E1) of the transmission hollow shaft (17) and provided for feeding air,
an agitator shaft (1) connected to a second end (E2) of the transmission hollow shaft (17), and
a hyperboloid agitator body according to any one of the preceding claims attached to a third end (E3) of the agitator shaft (1).

## Revendications

1. Corps d'agitation hyperboloïde destiné à faire circuler des liquides, en particulier de l'eau, des eaux usées ou similaires, au centre duquel se trouve une partie de raccordement (2) destinée à être raccordée à un arbre d'agitation (1) creux,
en ce que le corps d'agitation hyperboloïde se présente sous forme de corps creux, en ce qu'un passage (3) central destiné à acheminer de l'air se situant dans la partie de raccordement (2),
en ce qu'un dispositif de répartition d'air (9, 10, 11) destiné à répartir l'air acheminé à travers le passage (3) en direction de plusieurs orifices de sortie d'air (14) ménagés dans le corps creux se situe en aval du passage (3),
**caractérisé en ce que**
le corps d'agitation hyperboloïde est constitué d'une coque supérieure (5) contenant la partie de raccordement (2) et d'une coque inférieure (7) reliée à cette dernière, des conduits d'air (11) étant délimités par la coque supérieure (5) et la coque inférieure (7).

2. Corps d'agitation hyperboloïde selon la revendication 1, en ce que le dispositif de répartition d'air (9, 10, 11) comporte en aval du passage (3) un espace de répartition d'air (4) présentant plusieurs passages de répartition d'air (10).

3. Corps d'agitation hyperboloïde selon la revendication 2, en ce que chaque passage de répartition d'air (10) débouche dans un conduit d'air (11), lequel est délimité par des parois (8) s'étendant radialement sur certaines sections.

4. Corps d'agitation hyperboloïde selon la revendication 3, en ce que les orifices de sortie d'air (14) sont ménagés chacun au niveau des parties d'extrémité radialement à l'extérieur des conduits d'air (11).

5. Corps d'agitation hyperboloïde selon l'une des revendications précédentes, en ce que des nervures de transports (6) s'étendent radialement sur certaines sections à partir de la première face supérieure (O1) de la coque supérieure (5).

6. Corps d'agitation hyperboloïde selon l'une des revendications 3 à 5, en ce que les parois (8) s'étendent à partir d'une seconde face supérieure (O2) de la coque inférieure (7).

7. Corps d'agitation hyperboloïde selon l'une des revendications 3 à 6, en ce que le tracé des parois (8) correspond au tracé des nervures de transport (6) de sorte que, en assemblant la coque supérieure (5) et la coque inférieure (7), chaque face inférieure des nervures de transport s'appuie respectivement sur un bord supérieur des parois (8).

8. Corps d'agitation hyperboloïde selon l'une des revendications précédentes, en ce que la seconde face supérieure (O2) de la coque inférieure (7) est formée de manière concave, de préférence sous forme hyperboloïde.

9. Corps d'agitation hyperboloïde selon l'une des revendications précédentes, en ce que des ailettes de cisaillement (12) s'étendant radialement vers l'extérieur sont montées au niveau d'une seconde face inférieure (U2) de la coque inférieure (7) opposée à la seconde face supérieure (O2).

10. Corps d'agitation hyperboloïde selon l'une des revendications précédentes, en ce que les orifices de sortie d'air (14) sont ménagées à proximité d'un bord périphérique (U) de la coque inférieure (7).

11. Corps d'agitation hyperboloïde selon l'une des revendications 9 ou 10, en ce que l'un des orifices de sortie d'air (14) est ménagé respectivement entre deux ailettes de cisaillement (12).

12. Corps d'agitation hyperboloïde selon l'une des revendications précédentes, en ce que la coque supérieure (5) et la coque inférieure (7) sont réalisées respectivement en matière plastique renforcée par des fibres.

13. Corps d'agitation hyperboloïde selon l'une des revendications 2 à 12, en ce que l'espace de répartition d'air (4) est formé à partir d'un insert (9) à symétrie de révolution, de préférence conique, dans la paroi périphérique duquel sont ménagés les passages de répartition d'air (10).

14. Corps d'agitation hyperboloïde selon la revendication 13, en ce que l'insert (9) est réalisé en matière plastique renforcée par des fibres.

15. Dispositif d'agitation et d'apport de gaz, comprenant
un moteur (15),
un mécanisme (16) relié du point de vue entraînement au moteur (15) avec un arbre creux d'entraînement (17),
une soufflante destinée à acheminer de l'air, reliée à une première extrémité (E1) de l'arbre creux d'entraînement (17),
un arbre d'agitation (1) relié à une deuxième extrémité (E2) de l'arbre creux d'entraînement (17), et
un corps d'agitation hyperboloïde monté sur une troisième extrémité (E3) de l'arbre d'agitation (1) selon l'une des revendications précédentes.
